# EUROPEAN PATENT APPLICATION

(11) **EP 1 564 280 A1**
(43) Date of publication of application: **17.08.2005**
(21) Application number: 04447033.4
(22) Date of filing: 10.02.2004
(51) Int. Cl.: C09K 19/34, C09K 19/40

(54) **Liquid crystalline derivatives for multilayer electronic devices**

(71) Applicant: Université Libre De Bruxelles, 1050 Brussels (BE)
(72) Inventor: Kestemont, Gael, 1050 Brussels (BE); Geerts, Yves, 1160 Brussels (BE); Tant, Julien, 1080 Brussels (BE)
(74) Representative: Van Malderen, Joelle

(57) **Abstract**

The present invention is related to a mesogen material , soluble in high polarity solvents, based on a poly-aza-trinaphthylene of the structure I: 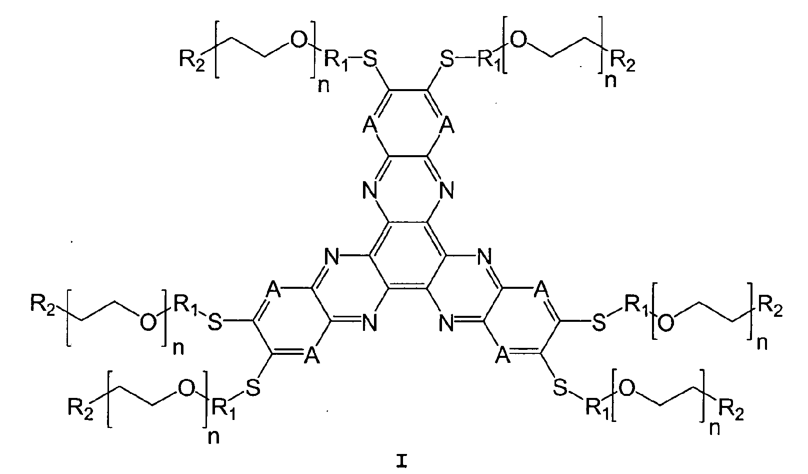 wherein A is C-R₄ or N (nitrogen), and n is the number of ethyleneoxy units in each chain.
R₂ is ether (O-R₃)
   ester (O-CO- R₃ or CO-O- R₃)
   ketone (CO-R₃)
   alkyl (R₃)
R₄ is hydrogen (H) or deuterium (D)
   halogen (F, Cl, Br or I)
   nitro (NO₂)
   nitryl (CN)
with R₁ and R₃ being an alkyl group, branched or not, of 1 to 10 carbon atoms. The number of ethyleneoxy units n is fixed between 1 and 6.

## Description

### Field of the invention

The present invention is related to multilayer electronic devices comprising derivatives of liquid crystalline poly-aza-trinaphthylene soluble in high polarity solvents, a method to produce said derivatives and their use in electronic devices.

### State of the art

Due to their tendency to self-organise in quasi-one dimensional semi-conducting columnar mesophases, liquid crystalline discotic materials are good candidates for electronic device applications.

The use of columnar discotic phases in electronic devices has been disclosed in the documents US 6281430 and WO/963608. It is known that the long-range conductivity strongly depends on the organisation of the molecules in the used material.

Otha et al. *(J. Mater. Chem.,* (2001), *11*, 423) showed that large highly ordered areas can be obtained by a slow cooling down of the material from the isotropic phase. Materials having a clearing point below the decomposition temperature are then highly desirable.

Méry et al. *(J. Mater. Chem.,* (2002), 12, 37) showed that crystallisation leads to a decrease in the material macroscopic electrical conductivity. The presence of a liquid crystalline phase at devices working temperatures is then favourable for applications.

The manufacturing of electronic devices, consisting in more than one layer of semiconductor is usually problematic. Indeed, if the bottom layer material is soluble in the solvent used in the top layer coating process, the former layer will be washed during the solution deposition process. Solutions manufacturing of devices consisting in at least two layers requires materials that show significant solubility differences. The use of a solvent wherein the first layer material is insoluble (a "bad" solvent), during the second layer coating is the only way to obtain two well defined layers on the top of each other.

Organic semiconductors dissolvable in low polarity solvents are very common. Non limitative examples of such solvents are hexane, heptane, cyclohexane, decahydronaphthalene, cyclohexene, diphenylmethane, benzene, toluene, xylene, 1, 2, 4-trichlorobenzene, 1, 2-dichloroethane, methylene chloride, chloroform, carbon tetrachloride, ...

Rare are the organic semiconductors with high solubility in high polarity solvents while in an ecological point of vue, those solvents are preferred versus apolar solvents. Non limitative examples of such solvents are water, methanol, ethanol, 1-propanol, 2-propanol, cyclohexanol, tetrahydrofuran, 1, 4-dioxane, diethyl ether, formaldehyde, ethyl acetate, 1-chlorobenzene, nitrobenzene, pyridine, acetonitrile, methyl-ethyl keton, ...

### Aims of the invention

The present invention aims to provide new electronic devices comprising molecules of poly-azatrinaphthylene that are soluble in high polarity solvents, a method for the production of those molecules and their use in electronic devices .

In particular, the present invention provides electronic multilayer devices with derivatives of 5, 6, 11, 12, 17, 18-hexaaza-trinaphthylene (HATNA) and 1, 4, 5, 6, 7, 10, 11, 12, 13, 16, 17, 18-dodecaaza-trinaphthylene (DATNA) with specific fonctionalizations, and a method to produce said derivatives.

### Summary of the invention

The present invention relates to a liquid crystalline poly-aza-trinaphthylene derivatives of the structure I: 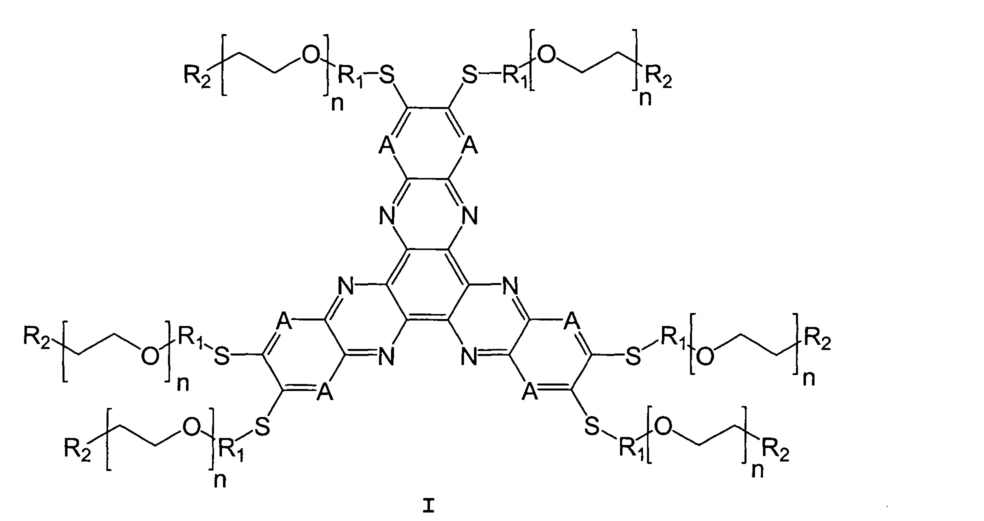 wherein A is C-R₄ or N (nitrogen), and n is the number of ethyleneoxy units in each chain.
R₂ is
   ether (O-R₃)
   ester (O-CO- R₃ or CO-O- R₃)
   ketone (CO-R₃)
   alkyl (R₃)
R₄ is
   hydrogen (H) or deuterium (D)
   halogen (F, C1, Br or I)
   nitro (NO₂)
   nitryl (CN)
with R₁ and R₃ being an alkyl group, branched or not, of 1 to 10 carbon atoms. The number of ethyleneoxy units n is fixed between 1 and 6.

In a first embodiment of the present invention, A is N (nitrogen) and R₂ is an ester (CO-O-R₃) in the compound according to the present invention.

In a second embodiment of the present invention, A is N (nitrogen) and R₂ is an alkyl (R₃) in the compound according the invention.

In one particular embodiment of the poly-azatrinaphthylene derivatives according to the invention, A is C-R₄, R₄ is H (hydrogen) and R₂ is an ether (O-R₃).

In another embodiment of the poly-azatrinaphthylene derivatives according to the invention, A is C-R₄, R₄ is H (hydrogen) and R₂ is an alkyl (R₃).

In an additional embodiment of the present invention, the poly-aza-trinaphthylene derivatives according to the invention, A is C-R₄, with R₄ = H (hydrogen) and R₂ is an ester (O-CO-R₃ or CO-O-R₃) .

In a further embodiment of the present invention, the poly-aza-trinaphthylene derivatives according to the invention, A is C-R₄, with R₄ = H (hydrogen) and R₂ is a ketone (CO-R₃) .

More advantageously, in the poly-azatrinaphthylene derivatives according to the invention, A is C-R₄, with R₄ is an halogen atom and R₂ is an ether (O-R₃).

In another aspect according to the invention, A is preferably C-R₄, with R₄ is a halogen atom and R₂ is preferably an alkyl (R₃).

Finally, in the compound according to the invention, A is C-R₄, with R₄ is a halogen atom and R₂ is an ester (O-CO-R₃ or CO-O-R₃).

According to a second aspect of the present invention, a method for the production of a liquid crystalline poly-aza-trinaphthylene derivatives comprising different reactions and a dissolving - precipitation purification procedure wherein:
- in a first solution of 2, 3, 8, 9, 14, 15-hexachloro-5, 6, 11, 12, 17, 18-hexaaza-trinaphthylene (300 mg, 0.5 mmol) in N,N-dimethylformamide (50 mL), is added an excess of 2- [2- (2-methoxy-ethoxy) -ethoxy] -ethanethiol (1.1 g, 6.1 mmol) and of 1,8-diazabicyclo[5.4.0]undec-7-ene (1.9 g, 12.5 mmol);
- said first solution is heated up to 60-120°C and stirred for 1 to 10 days under an inert atmosphere;
- after cooling to room temperature of said first solution, water (200 mL) is added to the reaction medium leaving a second solution;
- said second solution is extracted with ethyl acetate, and the remaining organic solution is evaporated leaving a solid;
- said solid is dissolved in hot chloroform, and reprecipitated by the addition of hexane leaving a third solution;
- said third solution is stored below 10°C for at least 2 hours and the formed suspension is recovered by filtration;
- said suspension is dissolved in hot toluene, and a hot filtration is made to eliminate the remaining insoluble suspension;
- the filtrate is heated up to reflux, and hexane is added in order to precipitate the final product.

According to an additional aspect a method for the production of a liquid crystalline poly-azatrinaphthylene derivatives , is disclosed wherein:
- said dissolving - precipitation purification procedure is repeated twice,
- after drying, the product is obtained as a dark red product.

The present invention further discloses the use of a liquid crystalline poly-aza-trinaphthylene derivatives in electronic devices and in particular in field effect transistors, photovoltaic devices and light emitting diodes.

### Short description of the drawings

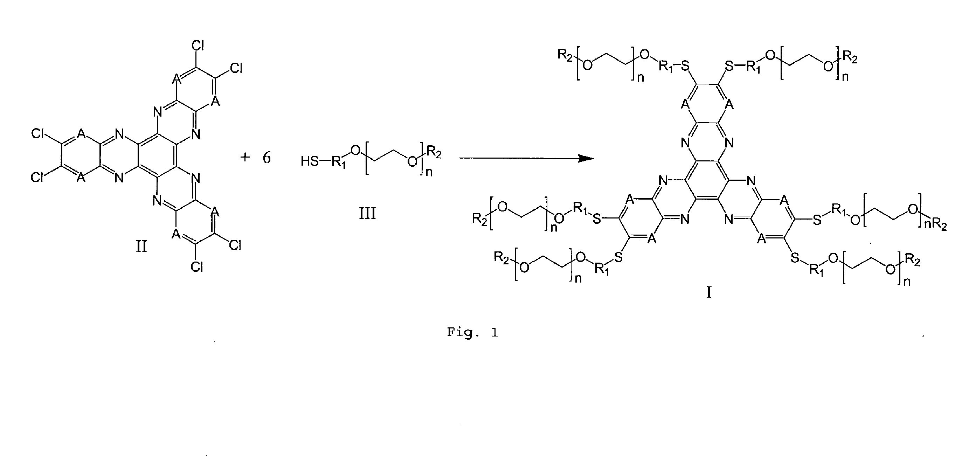

Fig.1 represents the nucleophilic substitution step between hexachloro-poly-azatrinaphthylene molecule II and the desired flexible chains III, to obtain trinaphthylene derivatives I.

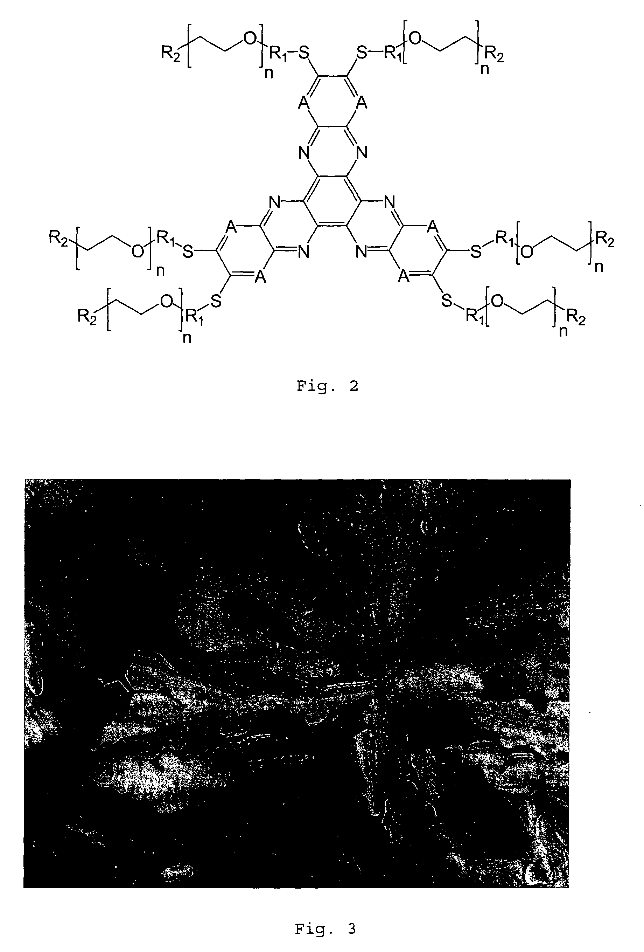

Fig.2 represents some preferred molecules of the present invention.
Where A is C-R₄ ; R₄ is H or Br ; R₁ is C₂H₄; R₂ is O-CH₃ or O-C₂H₅; n is 2 or 3.

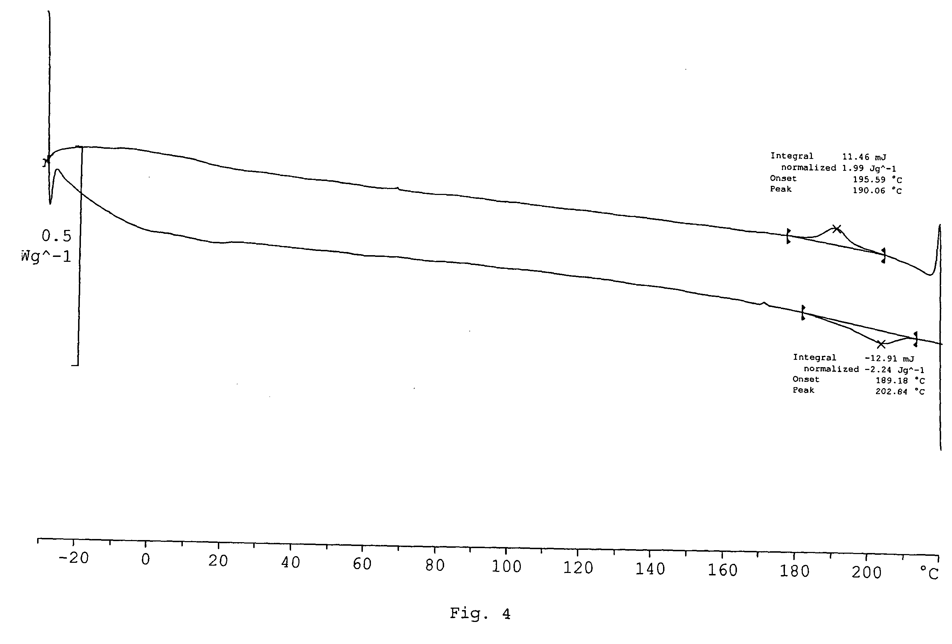

Fig.3 shows the liquid crystalline texture of the molecule of the example 1 under cross-polarized microscope, at around 180°C.

Fig.4 shows the differential scanning calorimetry traces of the molecule of the example 1 (heating and cooling rate: 10°C/min).

### Detailed description of the invention

The invention concerns 5, 6, 11, 12, 17, 18-hexaaza-trinaphthylene (HATNA) and 1, 4, 5, 6, 7, 10, 11, 12, 13, 16, 17, 18-dodecaaza-trinaphthylene (DATNA) derivatives, soluble in high polarity solvents, their use in electronic devices and a method to make said molecules.

Proceeding from reacting 2, 3, 8, 9, 14, 15-hexachloro-5, 6, 11, 12, 17, 18-hexaaza-trinaphthylene or 2, 3, 8, 9, 14, 15-hexachloro-1, 4, 5, 6, 7, 10, 11, 12, 13, 16, 17, 18-dodecaaza-trinaphthylene with the corresponding polyoxyalkyl-mercaptan derivative. Included in the invention the use of the spin-coating technique in small molecules based electronic devices manufacturing, and for these compounds, their uses as organic semiconductors in electronic devices.

The present invention discloses poly-azatrinaphthylene derivatives of the structure I: 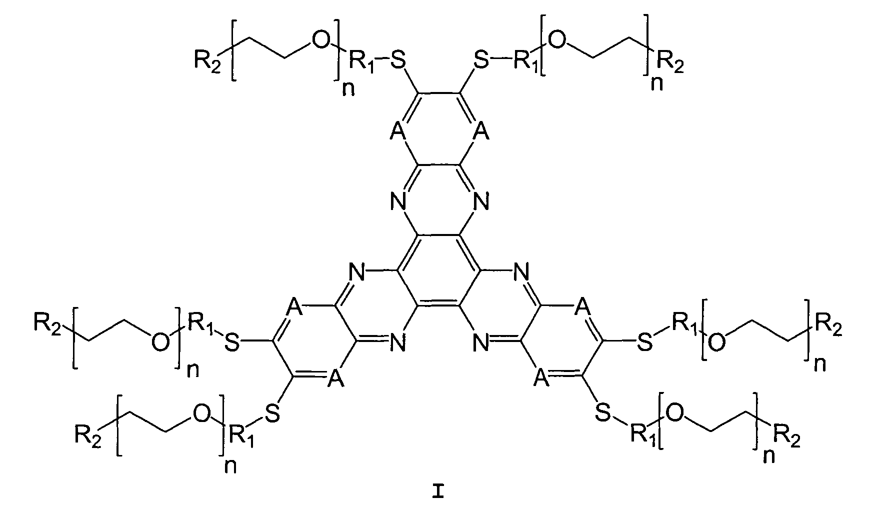 wherein A is C-R₄ or N (nitrogen), and n is the number of ethyleneoxy units in each chain.
R₂ is
   ether (O-R₃)
   ester (O-CO- R₃ or CO-O- R₃)
   ketone (CO-R₃)
   alkyl (R₃)
R₄ is
   hydrogen (H) or deuterium (D)
   halogen (F, Cl, Br or I)
   nitro (NO₂)
   nitryl (CN)
with R₁ and R₃ being an alkyl group, branched or not, of 1 to 10 carbon atoms. The number of ethyleneoxy units n is fixed between 1 and 6.

The preparation of HATNA or DATNA derivatives soluble in high polarity solvents, process comprises:
a) reacting hexachloro-poly-azatrinaphthylene II in non-protic polar solvent (N,N-dimethylformamide (DMF), 1, 3-dimethyl-2-imidazolidinone (DMI), methyl sulfoxide (DMSO), ...) with at least three times the molar amount of an organic base (1, 8-diazabicyclo[5.4.0]undec-7-ene (DBU), 1, 5-diazabicyclo[4.3.0]non-5-ene (DBN), triethylamine, ...), and with at least three times the molar amount of polyoxyalkyl-mercaptan derivative III, by heating the mix up to a temperature of at least 40°C; and
b) separating the HATNA or DATNA from a resulting reaction medium comprising said compound, remaining solvents, unused reactants and by-products.

Preferably, the process employs the polyoxyalkyl-mercaptan derivative III in an amount of 1 to 5 times the theoretical molar amount to react completely the hexachloro-poly-aza-trinaphthylene II. Preferably also, the process is done under inert atmosphere (nitrogen or argon). In addition, the use of ions-free conditions is preferred in order to facilitate the purification procedure.

### Description of a preferred embodiment of the invention

While commercially available materials may be used, another possibility is to prepare his own starting materials.

For preparing the materials used in the present invention, one of the possible ways is to use as precursors the hexachloro-poly-aza-trinaphthylene II and the corresponding polyoxyalkyl-mercaptan III.

For the use in the illustrative examples of the present invention 2, 3, 8, 9, 14, 15-hexachloro-5, 6, 11, 12, 17, 18-hexaaza-trinaphthylene was prepared, according to a previously described procedure (Kestemont, G.; de Halleux, V.; Lehmann, M.; Ivanov, D. A.; Watson, M.; Geerts, Y. H.; *Chem. Commun.,* (2001), 2074) in a one-step reaction from 4, 5-dichloro-2, 3-phenylenediamine and hexaketocyclohexane octahydrate.

In the representative example, 2- [2- (2-Methoxy-ethoxy)-ethoxy]-ethanethiol was obtained from 2-[2-(2-Methoxy-ethoxy)-ethoxy]-ethanol, proceeding as described previously (Bradshaw, J. S.; Krakowiak, K. E.; Izatt, R. M.; Bruening, R. L.; Tarbet, R. M.; *J. Heterocyclic Chem*., (1990), 27, 347).

To prepare HATNA or DATNA compounds, according to the present invention 2, 3, 8, 9, 14, 15-hexachloro-5, 6, 11, 12, 17, 18-hexaaza-trinaphthylene or 2, 3, 8, 9, 14, 15-hexachloro-1, 4, 5, 6, 7, 10, 11, 12, 13, 16, 17, 18-dodecaaza-trinaphthylene reacts with an excess of functionalised polyoxyalkyl-mercaptan, in presence of DBU, in DMF, to produce HATNA or DATNA derivatives in yields higher than 25%.

The new molecules are then isolated by extracting the reaction mixture (ethyl acetate - water), followed by dissolution - precipitation processes, using toluene and hexane as high and low solubility solvents respectively.

The molecules, soluble in high polarity solvents and in common organic solvents, are characterised by ¹H NMR, mass spectrometry, and absorption spectroscopy. Their thermotropic behaviour is characterised by cross-polarised microscopy and differential scanning calorimetry.

One embodiment of the present invention is illustrated in example 1.

### Example:

### 2, 3, 8, 9, 14, 15-hexa{2-[2-(2-methoxy-ethoxy)-ethoxy]-ethylsulfanyl}-5, 6, 11, 12, 17, 18-hexaaza-trinaphthylene A is C-R₄ ; R₄ is H ; R₁ is C₂H₄ ; R₂ is O-CH₃ ; n is 2.

In a solution of 2, 3, 8, 9, 14, 15-hexachloro-5, 6, 11, 12, 17, 18-hexaaza-trinaphthylene (300 mg, 0.5 mmol) in N,N-dimethylformamide (50 mL), is added an excess of 2-[2-(2-methoxy-ethoxy)-ethoxy]-ethanethiol (1.1 g, 6.1 mmol) and of 1, 8-diazabicyclo[5.4.0]undec-7-ene (1.9 g, 12.5 mmol). The solution is heated up to 60-120°C and stirred for 1 to 10 days under a nitrogen atmosphere. After cooling to room temperature, water (200 mL) is added to the reaction medium. The resulting mixture is extracted with ethyl acetate, and the organic solution is evaporated. The resulting solid is dissolved in hot chloroform, and precipitated by adding of hexane. The solution is stored below 10°C for at least 2 hours. The formed suspension is recovered by filtration. The obtained solid is dissolved in hot toluene, and a hot filtration is made to eliminate the remaining insoluble suspension. The filtrate is heated up to reflux, and hexane is added in order to precipitate the product. This dissolving - precipitation procedure is repeated twice. After drying, the product is obtained as a dark red product. Yield: 20 - 70%. Clearing point: 198 - 200°C.
¹H-NMR (CDCI₃, 300MHz): δ = 8.34 (s, 6H), 3.95 (t, J₁ = 6.5 Hz,12H), 3.73-3.68 (m, 36H), 3.59-3.56 (m, 12H), 3.48 (t, J₁ = 6.5 Hz, 12H), 3.39 (s, 18H).
MS (APCI): C₆₆H₉₆N₆O₁₈S₆ measured = 1453.3 ; calculated = 1453.9 .

## Claims

1. A liquid crystalline poly-azatrinaphthylene derivatives of the structure I: 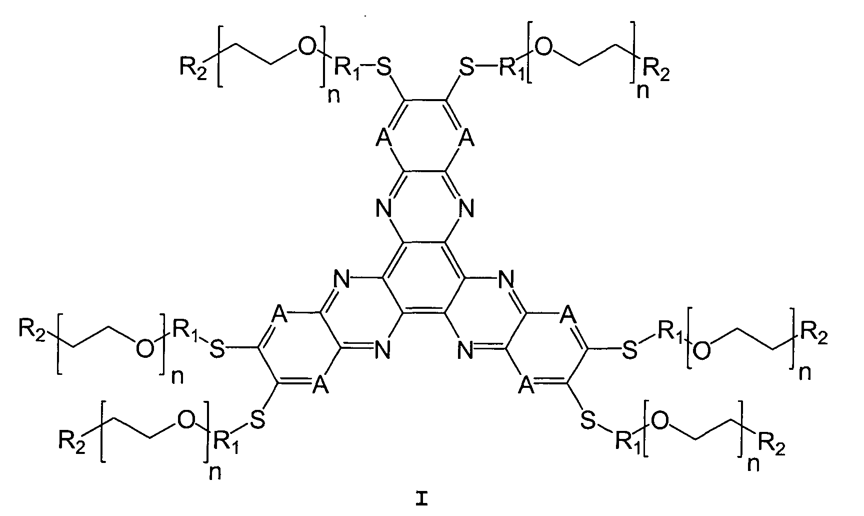 wherein A is C-R₄ or N (nitrogen), and n is the number of ethyleneoxy units in each chain.
R₂ i s
ether (O-R₃)
ester (O-CO- R₃ or CO-O- R₃)
ketone (CO-R₃)
alkyl (R₃)
R₄ is
hydrogen (H) or deuterium (D)
halogen (F, Cl, Br or I)
nitro (NO₂)
nitryl (CN)
with R₁ and R₃ being an alkyl group, branched or not, of 1 to 10 carbon atoms. The number of ethyleneoxy units n is fixed between 1 and 6.

2. A liquid crystalline derivative according to Claim 1, wherein A is N (nitrogen) and R₂ is an ether (O-R₃) .

3. A liquid crystalline poly-azatrinaphthylene derivatives according to Claim 1, wherein A is N (nitrogen) and R₂ is an alkyl (R₃) .

4. A liquid crystalline poly-azatrinaphthylene derivatives according to Claim 1, wherein A is N (nitrogen) and R₂ is a ketone (CO-R₃) .

5. A liquid crystalline poly-azatrinaphthylene derivatives according to Claim 1, wherein A is C-R₄, R₄ is H (hydrogen) and R₂ is an ether (O-R₃) .

6. A liquid crystalline poly-azatrinaphthylene derivatives according to Claim 1, wherein A is C-R₄, R₄ is H (hydrogen) and R₂ is an alkyl (R₃).

7. A liquid crystalline poly-azatrinaphthylene derivatives according to Claim 1, wherein A is C-R₄, R₄ is H (hydrogen) and R₂ is an ester (O-CO-R₃ or CO-O-R₃).

8. A liquid crystalline poly-azatrinaphthylene derivatives according to Claim 1, wherein A is C-R₄, R₄ is a halogen atom and R₂ is an ether (O-R₃) .

9. A liquid crystalline poly-azatrinaphthylene derivatives according to Claim 1, wherein A is C-R₄, R₄ is a halogen atom and R₂ is an alkyl (R₃) .

10. A liquid crystalline poly-azatrinaphthylene derivatives according to Claim 1, wherein A is C-R₄, R₄ is a halogen atom and R₂ is an ketone (O-R₃).

11. A liquid crystalline poly-azatrinaphthylene derivatives according to Claim 1, wherein A is C-R₄, R₄ is a halogen atom and R₂ is an ester (O-CO-R₃ or CO-O-R₃) .

12. A method for the production of a liquid crystalline poly-aza-trinaphthylene derivatives comprising different reactions and a dissolving - precipitation step wherin:
- in a first solution of 2, 3, 8, 9, 14, 15-hexachloro-5, 6, 11, 12, 17, 18-hexaaza-trinaphthylene (300 mg, 0.5 mmol) in N,N-dimethylformamide (50 mL), is added an excess of 2- [2- (2-methoxy-ethoxy) -ethoxy] -ethanethiol (1.1 g, 6.1 mmol) and of 1,8-diazabicyclo[5.4.0]undec-7-ene (1.9 g, 12.5 mmol);
- said first solution is heated up to 60-120°C and stirred for 1-10 days under a nitrogen atmosphere;
- after cooling to room temperature of said first solution, water (200 mL) is added to the reaction medium leaving a second solution;
- said second solution is extracted with ethyl acetate, and the remaining organic solution is evaporated leaving a solid;
- said solid is dissolved in hot chloroform, and reprecipitated by the addition of hexane leaving a third solution;
- said third solution is stored below 10°C for at least 2 hours and the formed suspension is recovered by filtration;
- said suspension is dissolved in hot toluene, and a hot filtration is made to eliminate the remaining insoluble suspension;
- the filtrate is heated up to reflux, and hexane is added in order to precipitate the final product.

13. A method for the production of a liquid crystalline poly-aza-trinaphthylene derivatives , according to Claim 12 wherein:
- said dissolving - precipitation step is repeated twice,
- after drying, the product is obtained as a dark red product.

14. An electronic device comprising the liquid crystalline poly-aza-trinaphthylene derivative of Claim 1.

15. Use of poly-aza-trinaphthylene derivatives as in any of the previous claims for applications in the area of field effect transistors, photovoltaic devices, light emitting diodes, and/or devices comprising liquid crystals.
